# EUROPEAN PATENT SPECIFICATION

(11) **EP 0 346 474 B1**
(45) Date of publication and mention of the grant of the patent: **23.03.1994**
(21) Application number: 88906898.7
(22) Date of filing: 11.08.1988
(51) Int. Cl.: B44C 1/165, B44C 1/17

(54) **TRANSFER PRINTING METHOD FOR CONTACT RUBBER**
TRANSFERDRUCKVERFAHREN FÜR KONTAKTKAUTSCHUK
PROCEDE D'IMPRESSION PAR TRANSFERT POUR CAOUTCHOUC CONTACT

(30) Priority: 16.12.1987 JP 316078/87
(43) Date of publication of application: 20.12.1989
(73) Proprietor: FUJI RUBBER COMPANY LIMITED, Tokyo 103 (JP)
(72) Inventor: KOMATSUZAKI, Noriko, Matsudo-shi Chiba 270 (JP)
(74) Representative: Fleuchaus, Leo, Dipl.-Ing.
(86) International application number: JP8800799
(87) International publication number: WO8905735

(56) References cited:
- EP-A- 0 129 023
- EP-A- 0 148 611
- DE-A- 3 046 832
- JP-A-57 047 632
- JP-A-57 201 688

## Description

### Background of the Invention

### 1. Field of the Invention

The present invention relates to an improved method for printing marks, figures and letters etc. on, for example, key tops of so-called contactor rubbers as switching keys on key board etc. of electronic apparatuses and instruments.

### 2. Description of the Prior Art

Japanese Patent Application JP-A-57-201688/1982 discloses a method for printing figures, letters, marks etc. on the key top of contactor rubber simultaneously with the molding of the contactor rubber, by transfer printing using a metallic transfer plate. In this prior method, letters or figures to be transferred onto the top of the simultaneously molded key body are once printed on the metallic transfer plate with a printing ink which is curable by vulcanization under cross linking by a mechanism similar to that of the silicone elastomer employed as the curable component of the molding mass to be molded into the key body and the so printed transfer plate is placed in the metal mold with the printed ink layer facing inside the mold cavity, whereupon the silicone elastomer-molding mass is subjected to press molding with heating so as to effect simultaneously transfer of the printed ink layer onto the molded product under cross linking of the ink layer and of the molded mass to obtain molded contactor rubber having bodily cured printing of said letters or figures on its top.

This prior transfer technique has, however, disadvantages that transfer printing may be impossible on a key top having uneven surface and that the metal mold may occasionally be scratched by the metallic transfer plate.

For other materials and contactor rubber there are printing methods disclosed in EP 0 148 611 and DE 3 046 832. Both use a foil for transferring the marks or letters, for a similar transfer as disclosed already in the Japanese patent application.

By the present invention, it is contemplated to eliminate the above disadvantages and to offer an improved method for molding, such as, key body or so-called contactor rubber for operation key board etc., with simultaneous transfer printing thereon.

The inventor has discovered that a flexible plastic film can be used as an original substrate for transfer printing in the place of metallic transfer plate without causing any inconvenience, such as, occurence of unsatisfactory surface finish and defects in the transfer printing on the molded product due to possible breakdown of the plastic film or sticking thereof on the molded product upon the press molding under severe mechanical and thermal condition, in contrast to the current assumption in this technical field.

Thus according to the present invention, there is proposed an improved method for obtaining a cured molded product, with a heat-curable ink printed layer of figures, letters and marks by press-molding a curable molding mass consisting of a rubber blend with simultaneous transfer of said figures, letters and marks onto the molded product by using printed substrate, wherein the press-molding is effected by heat to cause simultaneous vulcanization of the rubber blend and the heat-curable ink with a flexible plastic film of a heat-resistant flexible plastic resin being used as printing substrate capable of being fittet on the internal contour of uneven mold members due to its deep drawing properties, said flexible plastic film being peeled off after printing.

Figs. 1 and 2 illustrate a typical manner of press-molding of operation keys having curved key tops with simulataneous transfer printing thereon by the method according to the invention, by a sectional view.

Figs. 3 and 4 illustrate, also in a sectional view, another case of arrangement wherein the printing is effected on the bottom face of the key.

Figs. 5 and 6 illustrate, also in a sectional view, a further case of arrangement wherein the printing is effected over the upper face of the key.

### Detailed Description of Preferred Embodiments

The invention is now described in more detail by way of embodiments with reference to the appended drawings representing examples of the present invention.

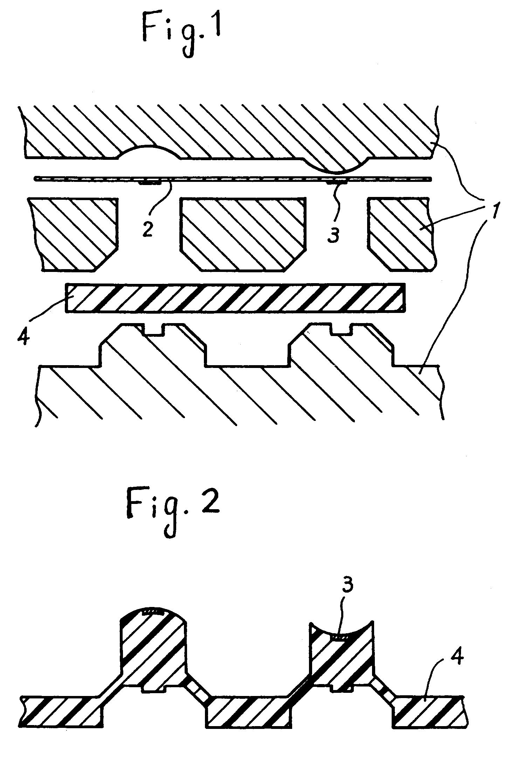

In Fig. 1, the arrangement of the metal mold 1, the original printing substrate 2 and a layer of the molding mass 3 before the press-molding is shown in a vertical sectional view. On the original printing substrate consisting of a film of a heat resistant flexible plastic resin, such as, PET etc., predetermined figures, letters or marks 3 are printed with a curable printing ink, such as, silicone ink. This film 2 is set in a predetermined position in the mold composed of mold members 1, 1, 1 and a layer of the molding mass 4 consisting of, for example, silicone rubber blend is placed on the mold bottom 1. The top and the bottom mold members 1, 1 are then pressed together to effect press-molding of the molding mass 4 between them. Here, the film 2 fits on the internal contour of the mold members due to its flexibility. The limit of deep drawing of the film is about 3 mm for film thicknesses below 20 µm, 5 mm for a film thickness of about 40 µm and 2 mm for film thicknesses over 50 µm due to the thereby reached too high hardness of the film. The press-molding is effected with heating by a not shown heating means to cause vulcanization of the silicone rubber blend 4 and of the heat-curable ink 3. By this simultaneous vulcanization, the molded key body 4 and the printed layer 3 are integrally combined together.

After the molding, the film 2 can be removed easily by peeling off, leaving the molded contactor rubber 4 with the integrally fixed printing layer 3 as shown in Fig. 2.

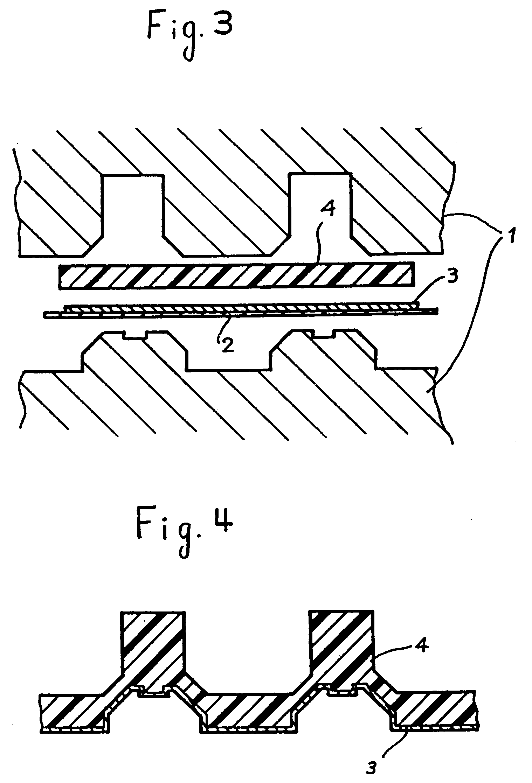

Fig. 3 shows the case in which the transfer printing is effected over the bottom face of the molded contactor rubber. Here, the plastic film 2 carrying on its lower side the printed ink layer 3 is disposed between the bottom member 1 of the metal mold and the layer of silicone rubber blend 4. The molded contactor rubber is shown in Fig. 4 in a vertical section.

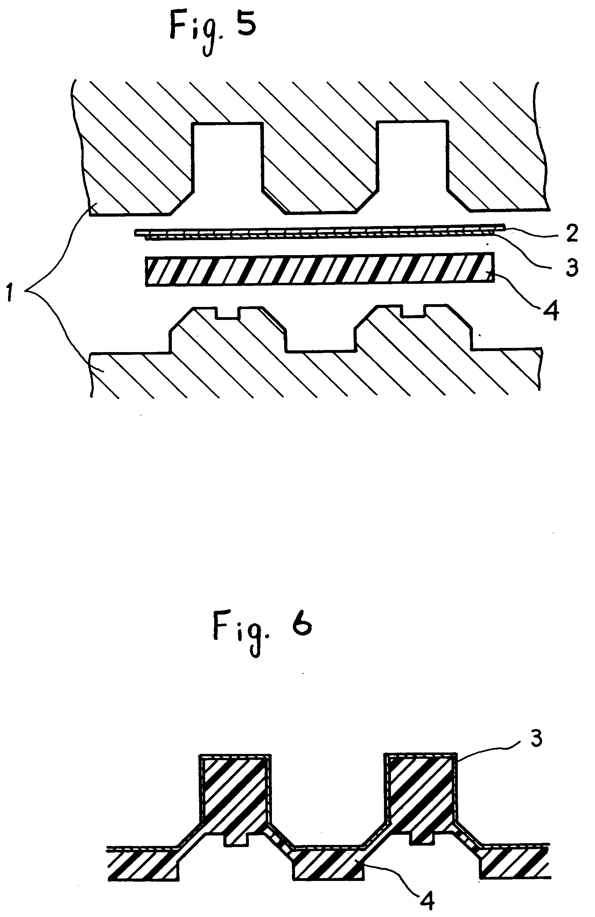

Fig. 5 shows the arrangement in the case of transfer printing over the upper face of the contactor rubber, the finished state of which is shown in Fig. 6.

The method according to the present invention offers various technical and economical advantages, since the plastic film used as the original printing substrate instead of the metallic transfer plate is light weighing and permitting use of rolled film to reduce work performance and over-all costs as compared with the metallic transfer plate. It permits to effect transfer printing on uneven surfaces of the contactor rubber without burr formation etc. It also permits to realize transfer printing on an embossed surface and thus facilitating fast firm bonding of the printed layer to the molded contactor rubber.

## Claims

1. Method for obtaining a cured molded product with a heat-curable ink (3) printed layer of figures, letters and marks by press-molding a curable molding mass consisting of a rubber blend (4) with simultaneous transfer of said figures, letters and marks onto the molded product by using a printed substrate (2), wherein the press-molding is effected by heat to cause simultaneous vulcanization of the rubber blend (4) and the heat-curable ink (3) with a flexible plastic film of a heat-resistant flexible plastic resin being used as printing substrate capable of being fittet on the internal contour of uneven mold members (1) due to its deep drawing properties, said flexible plastic film being peeled off after printing.

2. Method according to claim 1, **characterized by**
using for said rubber (4) silicone rubber and for said curable ink (3) silicone ink.

3. Method according to claim 1 or 2, **characterized by**
the use of said flexible plastic film (3) having a deep drawing limit of 3 mm for film thicknesses below 20 µm.

4. Method according to claims 2 to 3, **characterized by**
the use of said flexible plastic film (3) having a deep drawing limit of 5 mm for a film thickness of 40 µm.

5. Method according to claims 1 to 3, **characterized by**
the use of said flexible plastic film (3) having a deep drawing limit of 2 mm for a film thickness greater than 50 µm.

## Patentansprüche

1. Verfahren zum Herstellen eines ausgehärteten Formerzeugnisses mit einer mit wärmeaushärtbarer Druckfarbe (3) in der Form von Zahlen, Buchstaben und Zeichen ausgebildeten, gedruckten Schicht durch Preßformen einer aushärtbaren Formpreßmasse, die aus einem Kautschukgemisch (4) besteht, mit gleichzeitigem Umdruck dieser Zahlen, Buchstaben und Zeichen auf das preßgeformte Produkt durch Einsatz einer bedruckten Unterlage (2), wobei das Preßformen durch Wärme bewirkt wird, um gleichzeitig die Vulkanisierung des Kautschukgemisches (4) und der wärmeaushärtbaren Druckfarbe (3) zu bewirken, mit einem flexiblen Kunststoffilm aus einem wärmefesten, flexiblen Harz, das als Druckunterlage benutzt wird und das infolge der Tiefziehfähigkeiten dieses flexiblen Kunststoffilms an die Innenkontur unebener Formglieder (1) angepaßt werden kann und dieser Kunststoffilm nach dem Druckvorgang abgezogen wird.

2. Verfahren gemäß Anspruch 1, gekennzeichnet durch die Verwendung von Silikonkautschuk als Kautschuk (4) und von Silikon-Durckfarbe als aushärtbare Druckfarbe (3).

3. Verfahren gemäß Anspruch 1 oder 2, gekennzeichnet durch Verwendung des flexiblen Kunststoffilms (3) mit einer Tiefziehgrenze von 3 mm bei Filmdicken unter 20 µm.

4. Verfahren gemäß Anspruch 2 oder 3, gekennzeichnet durch Verwendung des flexiblen Kunststoffilms (3) mit einer Tiefziehgrenze von 5 mm bei Filmdicken von 40 µm.

5. Verfahren gemäß Anspruch 1 bis 3, gekennzeichnet durch Verwendung des flexiblen Kunststoffilms (3) mit einer Tiefziehgrenze von 2 mm bei Filmdicken über 50 µm.

## Revendications

1. Méthode pour obtenir un produit moulé, séché, présentant une couche de chiffres, lettres et marques imprimés avec de l'encre (3) séchant à la chaleur en moulant sous pression une masse de moulage séchable consistant en un mélange de caoutchouc (4) avec le transfert simultané desdits chiffres, lettres, marques, sur le produit moulé en utilisant un substrat imprimé (2), dans laquelle le moulage sous pression est effectué par la chaleur pour causer une vulcanisation simultanée du mélange de caoutchouc (4) et de l'encre (3) séchant à chaud avec un film de plastique souple d'une résine souple résistant à la chaleur, qui est utilisé comme substrat d'impression adapté pour épouser les contours internes de moules (1) inégaux du fait de ses propriétés d'emboutissage profond, ledit film de plastique souple étant pelé après l'impression.

2. Méthode selon la revendication 1, caractérisé par l'utilisation pour ledit caoutchouc (4) de caoutchouc silicieux, et pour ladite encre (3) séchable, de l'encre silicieuse.

3. Méthode selon les revendications 1 ou 2, caractérisée par l'utilisation dudit film plastique souple (3) ayant une limite d'emboutissage profond de 3 mm pour une épaisseur de film inférieure à 20 µm.

4. Méthode selon les revendications 2 et 3, caractérisée par l'utilisation dudit film de plastique souple (3) ayant une limite d'emboutissage profond de 5 mm pour une épaisseur de film de 40 µm.

5. Méthode selon les revendications 1 à 3, caractérisée par l'utilisation dudit film plastique souple (3) ayant une limite d'emboutissage profond de 2 mm pour une d'épaisseur de film supérieure à 50 µm.
